# EUROPÄISCHE PATENTANMELDUNG

(11) **EP 0 672 852 A1**
(43) Veröffentlichungstag der Anmeldung: **20.09.1995**
(21) Anmeldenummer: 95102623.6
(22) Anmeldetag: 23.02.1995
(51) Int. Cl.: F16J 15/34

(54) **Berührungsfrei laufende, gasgeschmierte Gleitringdichtung**

(30) Priorität: 16.03.1994 DE 4409021
(71) Anmelder: Feodor Burgmann Dichtungswerke GmbH & Co., D-82502 Wolfratshausen (DE)
(72) Erfinder: Nosowicz, Josef, Dr., D-82538 Geretsried (DE); Oberdörster, Ulrich, D-53797 Lohmar (DE)
(74) Vertreter: Geyer, Werner, Dr.-Ing.

(57) **Zusammenfassung**

Bei einer berührungsfrei laufenden, gasgeschmierten Gleitringdichtung ist ein sich über eine Vorspanneinrichtung (4) an einem Einbaugehäuse (5) abstützender Gleitring (2) vorgesehen, an dessen einer Stirnseite eine Gleitfläche (7) ausgebildet ist, die der Gleitfläche (8) eines zweiten, auf einer drehbaren Welle (1) befestigten Gleitringes (10) zugewandt ist. Zum Aufbau eines Gasdruckpolsters zwischen den beiden Gleitflächen (7, 8) bei Rotation der Welle (1) sind in die Oberfläche des einen Gleitrings (2) über dessen Umfang verteilt angeordnete, radial verlaufende, sich vom Außendurchmesser dieses Gleitrings (2) in Richtung zu dessen Innendurchmesser hin, jedoch nicht bis zu diesem erstreckende Gasführungskanäle (30) eingelassen, die an ihren radial innenliegenden Enden in quer zu ihnen angebrachte, im wesentlichen in Umfangsrichtung des Gleitringes (2) verlaufende Schmiertaschen (31) münden.

Die radial innenliegenden Begrenzungen der Schmiertaschen (31) liegen auf einem Durchmesser (D_{N}), der kleiner als der hydraulische Durchmesser (D_{H}) der Dichtung ist.

## Beschreibung

Die Erfindung bezieht sich auf eine berührungsfrei laufende, gasgeschmierte Gleitringdichtung mit einem über eine Vorspanneinrichtung sich an einem Einbaugehäuse abstützenden Gleitring, an dessen einer Stirnseite eine Gleitfläche ausgebildet ist, die der Gleitfläche eines zweiten, auf einer drehbaren Welle befestigten Gleitringes zugewandt ist, wobei bei Rotation der Welle zum Aufbau eines Gasdruckpolsters zwischen den beiden Gleitflächen in die Oberfläche des einen Gleitrings über dessen Umfang versetzt angeordnete, radial verlaufende, sich vom Außendurchmesser dieses Gleitrings in Richtung zu dessen Innendurchmesser hin, jedoch nicht bis zu diesem erstreckende Gasführungskanäle eingelassen sind, die an ihren radial innenliegenden Enden in quer zu ihnen angebrachte, im wesentlichen in Umfangsrichtung des Gleitringes angeordnete Schmiertaschen münden.

Insbesondere für die Abdichtung von Wellendurchführungen in langsam laufenden Maschinen, z. B. bei Förderschnecken, Rührwerken o.ä., werden vorwiegend einfach- oder doppeltwirkende Gleitringdichtungen eingesetzt, die mit Vorlage- oder Sperrflüssigkeit betrieben werden.

Es ist auch schon bekannt, hierfür trockenlaufende Gleitringdichtungen einzusetzen, die jedoch zu einem vergleichsweise großen Verschleiß und zum Auftreten unangenehmer Pfeifgeräusche führen. Zudem zeigt sich, daß insbesondere bei sehr geringen Umfangsgeschwindigkeiten ein sicherer Betrieb solcher Dichtungen nicht immer gewährleistet ist, da bei kleinen Drehgeschwindigkeiten kein ausreichend großer dynamischer Druck aufgebaut wird.

In der DE-OS 43 03 237 wird eine berührungsfrei laufende, gasgeschmierte Gleitringdichtung der eingangs genannten Art beschrieben, bei der neben den radial verlaufenden Gasführungsnuten auch noch an deren radial innenliegenden Enden quer zu diesen Nuten verlaufenden Schmiertaschen zur Erleichterung des hydrodynamischen Druckaufbaus für das Gasdruckpolster eingesetzt werden. Dabei liegen die Schmiertaschen mit ihren radial inneren Begrenzungen auf einem Durchmesser, der größer als der hydraulische Durchmesser der ganzen Dichtungsanordnung ist. Aber trotz des Vorhandenseins der Schmiertaschen ist bei sehr langsamem Lauf der Welle der hydrodynamische Druckaufbau zur Erzeugung eines Luftkissens zwischen den zwei Gleitflächen der beiden Gleitringe noch immer nicht stets zufriedenstellend, so daß sich gerade in diesem Bereich ein noch vergleichsweise großer Verschleiß ergibt und überdies auch weiterhin noch die Neigung zur Erzeugung von Pfeifgeräuschen besteht.

Ausgehend hiervon liegt der Erfindung die Aufgabe zugrunde, eine gattungsgemäße Gleitringdichtung so zu verbessern, daß der Aufbau eines Luftkissens zwischen den Gleitflächen der beiden Gleitringe gerade bei geringen Drehzahlen deutlich verbessert und dadurch der auftretende Verschleiß herabgesetzt sowie überdies das Entstehen von Pfeifgeräuschen verhindert oder zumindest deutlich reduziert wird.

Erfindungsgemäß wird dies bei einer Gleitringdichtung der eingangs genannten Art dadurch erreicht, daß die radial innenliegenden Begrenzungen der Schmiertaschen auf einem Durchmesser liegen, der kleiner als der hydraulische Durchmesser der Dichtung ist.

Die erfindungsgemäße Gleitringdichtung gestattet einen verschleißfreien Lauf ohne jegliche Pfeifgeräusche sowohl bei der Gleitring-Werkstoffpaarung Hart/Hart, wie auch bei der Paarung Hart/Weich, wobei der verschleißfreie Betrieb schon bei überraschend geringen Drehzahlen auftritt. Durch das Herabziehen der Gas-Schmiertaschen derart, daß deren radial innenliegende Durchmesser kleiner als der hydraulische Durchmesser der gesamten Dichtung sind, wird überraschenderweise schon bei sehr geringen Drehzahlen ein Zustand im Dichtspalt hergestellt, der einen berührungsfreien Lauf bei voll ausreichender Dichtfunktion vollauf gewährleistet. Bei der erfindungsgemäßen Gleitringdichtung findet durch die in der Gleitfläche angeordnete Nutenstruktur eine fast völlige Entlastung schon bei ganz geringen Drehzahlen statt. Die erfindungsgemäße Gleitringdichtung ist zwar im Stillstand geschlossen, läuft aber bei Betrieb bereits bei geringen Drehzahlen berührungslos und damit verschleißfrei, wobei auch keinerlei Pfeifgeräusche auftreten.

In vorteilhafter Ausgestaltung der Erfindung wird die Fläche jeder Schmiertasche in der Gleitfläche des betreffenden Gleitrings deutlich größer als die des zugehörigen Gasführungskanals ausgebildet, wodurch der Aufbau eines frühzeitig einsetzenden Drucks für das Gaskissen begünstig wird.

Eine andere, vorzugsweise Ausgestaltung der erfindungsgemäßen Gleitringdichtung besteht auch darin, daß die Gesamtfläche der eingelassenen Gasführungskanäle und Schmiertaschen in der Gleitfläche mindestens 50% der Ringfläche beträgt, die zwischen dem Außendurchmesser der Gleitfläche des die Gasführungskanäle und Schmiertaschen tragenden Gleitrings und dem die Schmiertaschen radial innen begrenzenden Durchmesser liegt. Auch diese Maßnahmen begünstigen den baldigen Aufbau des für die berührungslose Arbeit der Dichtung erforderlichen Gasdruckkissens zwischen den Gleitflächen.

Die Schmiertaschen und Gasführungskanäle können im Prinzip in der Gleitfläche jedes der beiden Gleitringe angebracht sein, werden jedoch bevorzugt in die Gleitfläche des am Einbaugehäuse abgestützen Gleitrings eingelassen.

Es ist weiterhin von Vorteil, wenn bei einer erfindungsgemäßen Gleitringdichtung die Tiefe der Gasführungskanäle größer als die der Schmiertaschen ist, was die baldige Ausbildung des Gasdruckkissens fördert.

Besonders zweckmäßig ist ferner, wenn die Tiefe der Gasführungskanäle und Schmiertaschen vom Außendurchmesser des Gleitrings radial nach innen hin kontinuierlich abnimmt, wobei, besonders bevorzugt, die Tiefe der Schmiertaschen an deren radial innerer Begrenzung Null ist.

Vorteilhafterweise wird auch für den Fall, daß die Schmiertaschen und Gasführungsnuten in die Gleitfläche des sich am Gehäuse abstützenden Gleitrings angebracht sind, dieser auf seiner der Gleitfläche abgewandten Seite mit einem stufenförmigen, radial etwas nach außen überstehenden Ringabsatz versehen, wodurch erreicht wird, daß der im drucklosem Betrieb parallele Dichtspalt mit steigendem Druck im Querschnitt eine V-Form annimmt.

Bevorzugt wird zudem der sich am Einbaugehäuse abstützende Gleitring von einem Stütz- bzw. Trägerelement drehsicher gehaltert, das seinerseits unter Einwirkung der Vorspanneinrichtung, (etwa in Form von Druckfedern) am Einbaugehäuse abgestützt ist.

Ganz besonders bevorzugt werden bei der erfindungsgemäßen Gleitringdichtung auch noch in die Gleitfläche des anderen, zweiten Gleitrings, des sogenannten "Gegenrings", von dessen Aussenumfang aus radial nach innen verlaufende Gasführungskanäle eingelassen, wobei bevorzugt deren radial innenliegende Enden auf einem Durchmesser liegen, der gleich oder kleiner als der hydraulische Durchmesser der gesamten Dichtanordnung ist. In einer anderen, ebenfalls bevorzugten Ausführungsform ist zumindest ein Teil der Gasführungskanäle im Gegenring sich radial nach innen bis über den hydraulischen Durchmesser der Dichtung hinweg erstreckend vorgesehen. Durch die Kombination des Einbringens von Nutenstrukturen in den sich zugewandten Gleitflächen beider Gleitringe ist eine weitere Verbesserung des Anlaufverhalten der Dichtung und deren Laufverhaltens bei sehr niedrigen Drehzahlen erreichbar.

Die Gasführungsnuten im Gegenring können in jeder vom Fachmann als geeignet angesehenen Form ausgebildet werden. Ganz besonders bevorzugt werden sie jedoch als vom Außenumfang des Gegenringes ausgehende, im wesentlichen sichelförmige, entgegengesetzt zur Drehrichtung gekrümmte Nuten, sogenannte "Schleppnuten", ausgebildet, deren Tiefe bevorzugt vom Außenumfang der Gleitfläche aus radial nach innen hin kontinuierlich abnimmt.

Die Erfindung wird nachfolgend anhand der Zeichnung im Prinzip beispielshalber noch näher erläutert. Es zeigen:
Fig. 1 eine Schnittdarstellung durch eine erfindungsgemäße Dichtung im Einbauzustand;
Fig. 2 eine Draufsicht auf einen Gleitflächenabschnitt des am Gehäuse abgestützten Gleitrings zur Darstellung der dort eingelassenen Gasführungsnuten und Schmiertaschen;
Fig. 3 eine Schnittdarstellung längs Linie A-A in Fig. 2,
die Fig. 4 und Fig. 5 Draufsichten auf Gleitflächenabschnitte des Gegenrings mit Darstellung zweier unterschiedlicher Arten der Ausbildung und Anordnung von in die Gleitfläche jeweils eingelassenen Gasführungsnuten, und
Fig. 6 eine Darstellung der wesentlichen Elemente der Gleitringdichtung aus Fig. 1, wobei die relative Zuordnung der einzelnen Elemente gezeigt und die für die Funktion der Dichtung wichtigen Durchmesser angegeben sind.

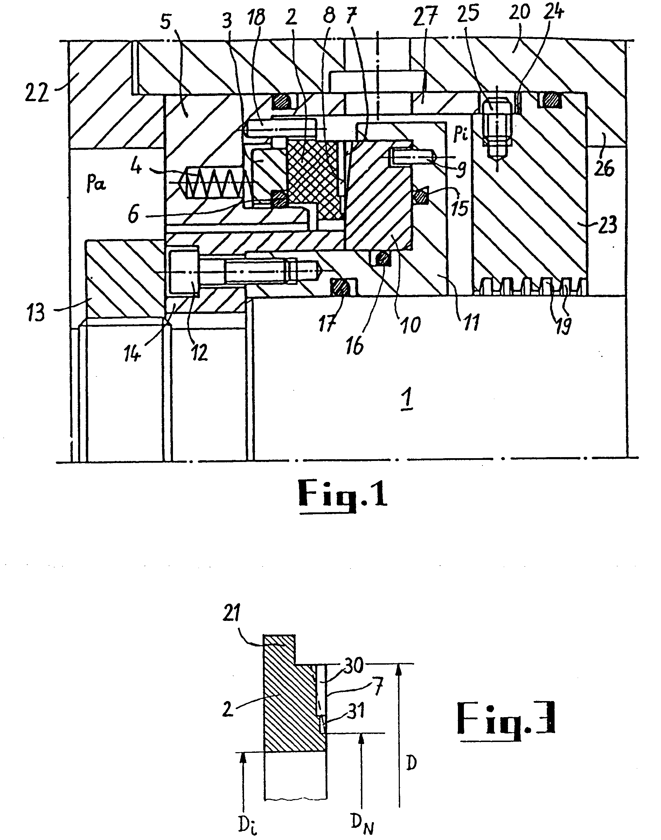

Die Schnittdarstellung gemäß Fig. 1 zeigt eine abzudichtende Welle 1, die mit einer gasgeschmierten Gleitringdichtung abgedichtet ist. Diese Gleitringdichtung umfaßt dabei einen ersten Gleitring 2, der an einem zugeordneten ringförmigen Halte- bzw. Trägerelement 3 in einer in der Figur nicht gezeigten Weise drehsicher befestigt ist. Das Halte- bzw. Trägerelement 3 ist seinerseits über verschiedene, entlang seinem Umfang angebrachte Druckfedern 4 unter Vorspannung gegenüber einem Einbaugehäuse 5 abgestützt, wobei Anordnung und Anzahl dieser Federn dem jeweiligen Einsatz entsprechend gewählt werden kann.

Zur Vermeidung eines Druckausgleichs zwischen dem Innendruck pᵢ innerhalb des Einbaugehäuses 5 und dem Druck pₐ auf der Außenseite desselben ist zwischen dem Stützelement 3 und dem Gleitring 2 in einer durch eine Aussparung am Innenumfang des Stützelementes 3 ausgebildeten Nut eine als O-Ring ausgebildete Dichtung 6 in der aus Fig. 1 ersichtlichen Weise angebracht.

Der Gleitring 2 bildet auf seiner den Stützelement 3 abgewandten Flanke eine Gleitfläche 7 aus, an der sich bei Stillstand der Welle 1 die Gleitfläche 8 eines axial daneben angeordneten, an der Welle 1 in geeigneter Weise, z. B. durch Bolzen 9, drehschlüssig befestigten zweiten Gleitringes 10 anlegt. Der bzw. die Bolzen 9 bilden dabei eine drehschlüssige Verbindung zwischen dem Gleitring 10 und einem auf der Welle 1 sitzenden Halteflansch 11, der seinerseits über Schrauben 12 an einer ihrerseits mittels einer Mutter 13 auf der Welle 1 verspannten und damit fixierten Ringaufnahme 14 befestigt ist, die gleichzeitig auch noch den Gleitring 10 in seinem radial innenliegenden Bereich gegenüber einer Anschlagsfläche am Halteflansch 11 verspannt. Zwischen dem Gleitring 10 und dem Halteflansch 11 sind sowohl in radialer, wie auch in axialer Richtung wirksame, als O-Ringe ausgebildete und jeweils in entsprechenden Haltenuten des Wellenflansches 11 angeordnete Dichtungen 15, 16 vorgesehen. Des weiteren ist am Innendurchmessers des Wellenflansches 11 in einer dort ausgebildeten Ring-Umlaufnut eine weitere, ebenfalls als O-Ring ausgebildete Dichtung 17 zur Abdichtung des Wellenflansches 11 gegenüber der Welle 1 angebracht.

Beim Gleitring 2 handelt es sich im gezeigten Ausführungsbeispiel um einen weichen Kohlering, während der Gleitring 10 aus hartem Material, bevorzugt SiC, gefertigt ist. Der Gleitring 2 ist in Axialrichtung der Welle verschieblich und weist an seiner der Gleitfläche 7 gegenüberliegenden Seite eine stufenartige, ringförmige, radiale Erweiterung 21 auf, die aus der Darstellung der Fig. 2 (Draufsicht auf einen Ausschnitt den Gleitfläche des Gleitrings 2) und Fig. 3 (Schnitt durch den Gleitring 2 gemäß Schnittlinie A-A in Fig. 2) gut erkennbar ist. Wie Fig. 1 zeigt, wird mittels eines oder mehreren, achsparallel angeordneten, am Einbaugehäuse 5 befestigten Führungsstift(en) 18 für den Gleitring 2 eine Führung bei axialen Bewegungen und gleichzeitig auch eine Verdrehsicherung geschaffen.

Das Einbaugehäuse 5 ist im gezeigten Ausführungsbeispiel nicht mit den Gerätegehäuse 20 identisch, sondern in Form einer in das Gehäuse 20 einbringbaren Einschubhülse 5 ausgebildet. Diese Einschubhülse 5 weist in ihrem radial außenliegenden Bereich einen in das Innere des Gehäuses 20 hin vorstehenden Ringabsatz 27 auf, der einen Innenraum zur Aufnahme der gesamten Dichtungsanordnung ausbildet, und ist von der Gehäuseaußenseite mittels eines Deckels 22 verspannt.

Der Ringvorsprung 21 sitzt ferner mit seinem in das Gehäuse 20 vorstehenden Endbereich auf einem Stufenabsatz 24 eines mit der Welle 1 eine produktseitige Drosselstelle 19 ausbildenden Ringelementes 23 und ist dort über z. B. radial angeordnete Schraubbolzen 25 oder andere geeignete Mittel mit dem Ringelelement 23 verbunden, wobei dieses seinerseits mit seiner abgewandten Flanke gegen einen innen am Gehäuse 20 ausgebildet Radialabsatz 26 anliegt.

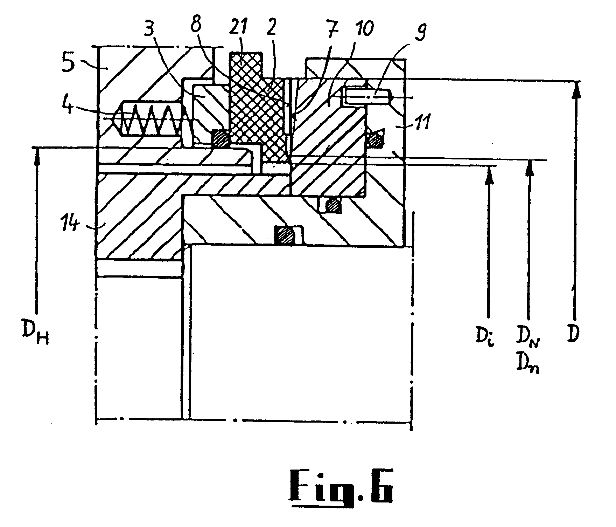

Fig. 6 zeigt noch einmal die wesentlichen Elemente der Gleitring-Dichtungsanordnung der Fig. 1, jedoch nur in einem die relative Lage der wichtigsten Teile zueinander darstellenden Ausschnitt, in dem auch die verschiedenen für die Funktion der Dichtung wichtigen Durchmesser angegeben sind, nämlich der Außendurchmesser D der Gleitfläche beider Dichtringe 2 und 10, die Durchmesser D_{N} bzw. Dₙ, auf denen jeweils die radial innenliegenden Begrenzungsflächen (bzw. Enden) der Schmiertaschen 31 bzw. die radial inneren Enden der Gasführungsnuten 40, 41 (am Gegenring) angeordnet sind, der radiale Innendurchmesser Dᵢ der Gleitfläche der Gleitringe 2 und 10 sowie der hydraulische Durchmesser D_{H} der gesamten Dichtungsanordnung.

Eine Draufsicht auf einen Ausschnitt der Gleitfläche 7 des Gleitringes 2 ist in Fig. 2 dargestellt. Dort sind in die Gleitfläche 7, in Umfangsrichtung zueinander versetzt, verschiedene Gasführungskanäle 30 eingelassen, die jeweils vom Außendurchmesser D aus radial nach innen verlaufen und an ihrem radial innenliegenden Ende in quer zu ihnen verlaufende Schmiernuten 31 einmünden. Diese Schmiernuten 31 erstrecken sich, wie aus Fig. 2 gut erkennbar ist, in Umfangsrichtung des Gleitrings 2 und ihre radial innenliegenden Begrenzungsflächen 32 liegen auf einem Radius D_{N}, der, wie ebenfalls aus Fig. 2 entnehmbar, kleiner als der hydraulische Durchmesser D_{H} dieser Gleitdichtung ist. Dabei ist die in der Gleitfläche 7 ausgebildete Grundfläche jeder Schmiernut 31 deutlich größer als die des zugehörigen Gasführungskanals 30, bevorzugt etwa 1,8 bis 2,5 mal größer.

Aus der Schnittdarstellung des Gleitrings 2 in Fig. 3 (entsprechend der Schnittlinie A-A aus Fig. 2) ist ersichtlich, daß die Tiefe der Schmiertaschen 31 geringer als die der Gasführungskanäle 30 ist. Neben der in Fig. 3 dargestellten Ausbildung einer jeweils gleich großen Tiefe längs der Erstreckung jedes Gasführungskanals 30 bzw. jeder Schmiertasche 31 ist es aber in vielen Anwendungsfällen günstig, wenn stattdessen der in Fig. 3 gestrichelt eingezeichnete Tiefenverlauf eingesetzt wird, bei dem die Tiefe der Gasführungskanäle 30 sowie der anschließenden Schmiertaschen 31 nicht konstant ist, sondern, ausgehend vom radialen Außendurchmesser D der Gleitfläche 7, sich in Richtung radial nach innen hin kontinuierlich derart verkleinert, daß an der Stelle der radial innenliegenden Begrenzung 32 der Schmiertaschen 31 die Tiefe Null erreicht wird, während die größte Nuttiefe am Außendurchmesser D der Gleitfläche 7 vorliegt.

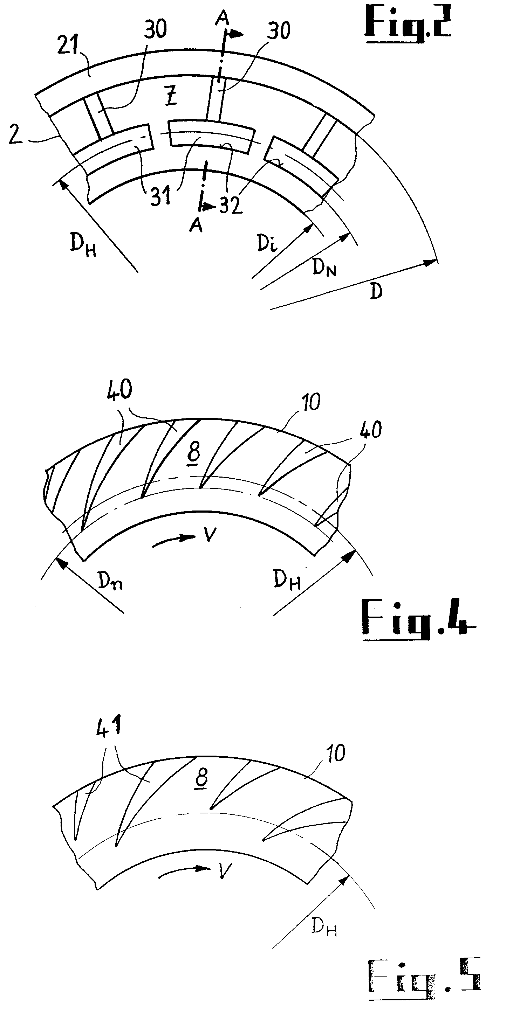

Die Figuren 4 und 5 zeigen, in ähnlicher Darstellungsweise wie Fig. 2, jeweils eine Draufsicht auf einen Ausschnitt der Gleitfläche 8 des Gleitringes 10, wobei in beiden Figuren unterschiedliche Formen von in die Gleitfläche eingelassenen Gasführungsnuten 40 (Fig. 4) bzw. 41 (Fig. 5) dargestellt sind. Die Ausbildung der Gasführungsführungsnuten 40, wie sie in Fig. 4 gezeigt ist, zeigt Gasführungsnuten bzw. -Kanäle gleicher Form ab, die im wesentlichen sichelförmig ausgebildet und deren Seitenflanken entgegengesetzt zur Drehrichtung V gekrümmt sind. Dabei liegen die radial innenliegenden Enden der Gasführungsnuten 40 auf einem Durchmesser Dₙ, der gleich dem hydraulischen Durchmesser D_{H} der Dichtung oder kleiner als dieser ist und vorzugsweise gleich dem Durchmesser D_{N} der radial innenliegenden Enden der Schmiertaschen 31 im Gleitring 2 gewählt wird. Von diesem Fußpunkt aus erstrecken sich die Gasführungskanäle 40, wie aus Fig. 4 ersichtlich, in Richtung zum Außendurchmesser D hin mit einer sich kontinuierlich erweiternden Nutbreite. Die Nuttiefe kann, ähnlich wie bei den Gasführungsnuten 30 oder den Schmiertaschen 31 im Gleitring 2, über die Erstreckung der betreffenden Gasführungsnut 40 hinweg gleich groß oder auch kontinuierlich vom Außenumfang D aus in Richtung zum radial innenliegenden Nutende hin abnehmen, wobei besonders bevorzugt in letzteren Fall am radial innenliegenden Nutende die Tiefe Null erreicht wird.

Bei der Nutform, die in Fig. 5 dargestellt ist, handelt es sich wiederum um einzelne sichelförmige, entgegen der Drehrichtung V gekrümmte Nuten 41, die jedoch unterschiedlich weit vom Außendurchmesser D des Gleitringes 10 aus in der Gleitfläche 7 radial nach innen verlaufen. Dabei erstreckt sich zumindest ein Teil der Nuten 41 in der Gleitfläche 8 radial so weit in Richtung auf den Innendurchmesser Dᵢ hin, daß ihre radial innenliegenden Scheitelpunkte in dem Ringbereich enden, der nach außen vom hydraulischen Durchmesser D_{H} der gesamten Dichtungsanordnung und nach innen vom Innendurchmesser Dᵢ der Gleitfläche 8 des Gleitringes 10 begrenzt wird, d. h. sie ragen unter den hydraulischen Durchmesser D_{H} hinunter.

Die in dem Ausführungsbeispiel gezeigte Dichtung kann von ihrem prinzipiellen Aufbau her sowohl für die Gleitflächen-Reibpaarung Hart/Hart, wie auch für die Reibpaarung Hart/Weich eingesetzt werden. Als hartes Gleitringmaterial bieten sich insbesondere SiC oder auch Chromguß an, während als weiches Material bevorzugt Kohle eingesetzt wird.

## Patentansprüche

1. Berührungsfrei laufende, gasgeschmierte Gleitringdichtung mit einem über eine Vorspanneinrichtung sich an einem Einbaugehäuse abstützenden Gleitring, an dessen einer Stirnseite eine Gleitfläche ausgebildet ist, die der Gleitfläche eines zweiten, auf einer drehbaren Welle befestigten Gleitringes zugewandt ist, wobei zum Aufbau eines Gasdruckpolsters zwischen den beiden Gleitflächen bei Rotation der Welle in die Oberfläche des einen Gleitrings über dessen Umfang verteilt angeordnete, radial verlaufende, sich vom Außendurchmesser dieses Gleitrings in Richtung zu dessen Innendurchmesser hin, jedoch nicht bis zu diesem, erstreckende Gasführungskanäle eingelassen sind, die an ihren radial innenliegenden Enden in quer zu ihnen angebrachte, im wesentlichen in Umfangsrichtung des Gleitringes verlaufende Schmiertaschen münden, **dadurch gekennzeichnet**, daß die radial innenliegenden Begrenzungen (32) der Schmiertaschen (31) auf einem Durchmesser (D_{N}), der kleiner als der hydraulische Durchmesser (D_{H}) der Dichtung ist, liegen.

2. Gleitringdichtung nach Anspruch 1, dadurch gekennzeichnet, daß die Fläche jeder Schmiertasche (31) in der zugeordneten Gleitfläche (7) deutlich größer als die des zugehörigen Gasführungskanales (30) ist.

3. Gleitringdichtung nach Anspruch 1 oder 2, dadurch gekennzeichnet, daß die Gesamtfläche der in die Gleitfläche (7) eingelassenen Gasführungskanäle (30) und Schmiertaschen (31) mindestens 50% der Ringfläche zwischen dem Außendurchmesser (D) und dem die Schmiertaschen (32) radial innen begrenzenden Durchmesser (D_{N}) beträgt.

4. Gleitringdichtung nach einem der Ansprüche 1 bis 3, dadurch gekennzeichnet, daß die Gasführungskanäle (30) und Schmiertaschen (31) in die Gleitfläche (7) des am Einbaugehäuse (5) abgestützten Gleitrings (2) eingelassen sind.

5. Gleitringdichtung nach einem der Ansprüche 1 bis 4, dadurch gekennzeichnet, daß die Tiefe der Gasführungskanäle (30) größer als die der Schmiertaschen (31) ist.

6. Gleitringdichtung nach einem der Ansprüche 1 bis 5, dadurch gekennzeichnet, daß die Tiefe der Gasführungskanäle (30) und der Schmiertaschen (31) vom Außendurchmesser (D) der Gleitfläche (7) in Richtung radial nach innen hin kontinuierlich abnimmt.

7. Gleitringdichtung nach Anspruch 6, dadurch gekennzeichnet, daß die Tiefe der Schmiertaschen (31) an deren radial innerer Begrenzung (32) Null ist.

8. Gleitringdichtung nach Anspruch 4 oder Anspruch 4 und einem der Ansprüche 5 bis 7, dadurch gekennzeichnet, daß der sich am Einbaugehäuse (5) abstützende Gleitring (2) auf der seiner Gleitfläche (7) abgewandten Seite mit einem stufenförmigen, radial überstehenden Ringabsatz (27) versehen ist.

9. Gleitringdichtung nach einem der Ansprüche 1 bis 8, dadurch gekennzeichnet, daß der sich am Einbaugehäuse (5) abstütztende Gleitring (2) an einem Stützelement (3) drehsicher gehaltert ist.

10. Gleitringdichtung nach einem der Ansprüche 1 bis 9, dadurch gekennzeichnet, daß auch in die Gleitfläche (8) des anderen Gleitrings (Gegenring) (10) radial verlaufende Gasführungskanäle (40; 41) eingelassen sind.

11. Gleitringdichtung nach Anspruch 10, dadurch gekennzeichnet, daß die radial innenliegenden Enden der Gasführungskanäle (40) im Gegenring (10) auf einem Durchmesser Dₙ liegen, der gleich dem oder kleiner als der hydraulische Durchmesser D_{H} der Dichtung ist.

12. Gleitringdichtung nach Anspruch 10, dadurch gekennzeichnet, daß sich zumindest ein Teil der Gasführungskanäle (41) im Gegenring (10) radial nach innen bis über den hydraulischen Durchmesser (D_{H}) der Dichtung hinweg erstreckt.

13. Gleitringdichtung nach einem der Ansprüche 10 bis 12, dadurch gekennzeichnet, daß die Gasführungskanäle im Gegenring (10) als von dessen Außenumfang (D) ausgehende, im wesentlichen sichelförmige, entgegengesetz zur Drehrichtung (V) gekrümmte Nuten (40; 41) ausgebildet.

14. Gleitringdichtung nach Anspruch 13, dadurch gekennzeichnet, daß die Tiefe der sichelförmig gekrümmten Nuten (40; 41) vom Außenumfang (D) der Gleitfläche (8) aus radial nach innen hin kontinuierlich abnimmt.
